# EUROPEAN PATENT APPLICATION

(11) **EP 4 742 652 A1**
(43) Date of publication of application: **13.05.2026**
(21) Application number: 24911107.1
(22) Date of filing: 24.12.2024
(51) Int. Cl.: H04N 13/344

(54) **ELECTRONIC DEVICE AND DISPLAY METHOD THEREFOR, PROCESSING DEVICE, AND COMPUTER-READABLE STORAGE MEDIUM**

(30) Priority: 29.12.2023 CN 202311861641
(71) Applicant: Boe Technology Group Co., Ltd., Beijing 100015 (CN)
(72) Inventor: YAO, Chaoquan, Beijing 100176 (CN); ZHAO, Junjie, Beijing 100176 (CN); ZHANG, Honglei, Beijing 100176 (CN); LV, Yaoyu, Beijing 100176 (CN); LI, Zhifu, Beijing 100176 (CN); SHI, Juanjuan, Beijing 100176 (CN); FAN, Qingwen, Beijing 100176 (CN); QIN, Ruifeng, Beijing 100176 (CN); MIAO, Jinghua, Beijing 100176 (CN); CHU, Xiao, Beijing 100176 (CN); SU, Jing, Beijing 100176 (CN); CHEN, Shaobei, Beijing 100176 (CN)
(74) Representative: CMS Cameron McKenna Nabarro Olswang LLP
(86) International application number: PCT/CN2024/141799
(87) International publication number: WO 2025/140182

(57) **Abstract**

An electronic device and a display method therefor, a processing device, and a computer-readable storage medium. The electronic device comprises an image collection apparatus. The method comprises: detecting whether an electronic device enables a see-through function; and when the electronic device enables the see-through function, controlling the collection frame rate of an image collection apparatus to be a second frequency, wherein the second frequency is an integer multiple of a first frequency, and the first frequency is the light-emission frequency of ambient light.

## Description

The present application claims priority to Chinese Patent Application No. 202311861641.1 filed to the CNIPA on December 29, 2023, and entitled "Electronic Device and Display Method Therefor, Processing Device, and Computer-Readable Storage Medium", contents of which should be understood as being incorporated herein by reference.

### Technical Field

The present disclosure relates to intelligent display technology, in particular to an electronic device and a display method thereof, a processing device, and a computer-readable storage medium.

### Background

Currently, the Virtual Reality (VR)/Mixed Reality (MR) industry is developing rapidly. A VR application is a computer-generated 3D environment, which may enable users to be completely immersed in a virtual world presented by a head mounted device instead of seeing a real environment. The MR application mixes a real world and a virtual world to create a new visual and interactive environment, which contains both a physical entity and virtual information. In such environment, characters and objects in the real world and virtual world may cross a boundary of reality, thus creating a more complex and exciting experience.

In some VR/MR products, a camera for see through is reused by a camera for gesture tracking. When a condition for starting see through is met, the camera acquires an external image. Because a light emitting frequency of ambient light interferes with an acquisition frame rate of the camera, especially when indoor light emitting diodes (LEDs) are on, a light emitting frequency of light of the indoor LEDs will seriously interfere with the acquisition frame rate of the camera, resulting in obvious flicker phenomenon (Flicker), which will cause uses' discomfort and affect adversely the use experience of the users.

### Summary

The following is a summary of subject matters described herein in detail. This summary is not intended to limit the protection scope of claims.

The present disclosure provides a display method of an electronic device, wherein the electronic device includes an image acquisition apparatus, and the display method includes: detecting whether the electronic device enables a see-through function; and controlling an acquisition frame rate of the image acquisition apparatus to be a second frequency when the electronic device enables the see-through function,, wherein the second frequency is an integer multiple of a first frequency, and the first frequency is a light emitting frequency of ambient light.

An embodiment of the present disclosure also provides a processing device, including: a processor and a memory storing a computer program that is runnable on the processor, wherein when executing the program, the processor performs acts of the display method as described above.

An embodiment of the present disclosure also provides an electronic device, including an image acquisition apparatus and the processing device according to any embodiment of the present disclosure.

An embodiment of the present disclosure also provides a computer readable storage medium for storing executable instructions, wherein the display method as described in any one of the above embodiments may be implemented when the executable instructions are executed by a processor.

In the electronic device and the display method thereof, the processing device and the computer-readable storage medium according to embodiments of the present disclosure, by controlling an acquisition frame rate of an image acquisition apparatus to be a second frequency when the electronic device enables a see-through function, wherein the second frequency is an integer multiple of a first frequency, and the first frequency is a light emitting frequency of ambient light, the problem of flicker caused by interference between the light emitting frequency of ambient light and the acquisition frame rate of the camera is solved, and the use experience of the users is improved.

Other features and advantages of the present disclosure will be set forth in the following specification, and moreover, partially become apparent from the specification, or are understood by implementing the present disclosure. Other advantages of the present disclosure may be achieved and obtained through solutions described in the specification and drawings.

### Brief Description of Drawings

Accompanying drawings are used to provide an understanding of technical solutions of the present disclosure, and form a part of the specification. The accompanying drawings and embodiments of the present disclosure are adopted to explain the technical solutions of the present disclosure, and do not form limitations on the technical solutions of the present disclosure.
FIG. 1 is a schematic flowchart of a display method according to an exemplary embodiment of the present disclosure.
FIG. 2 is a schematic diagram of a method of using a head mounted display according to an exemplary embodiment of the present disclosure.
FIG. 3 to FIG. 8 are schematic flowcharts of several display methods according to exemplary embodiments of the present disclosure.
FIG. 9 is a schematic diagram of an interface for manually setting an acquisition frame rate of an image acquisition apparatus according to an exemplary embodiment of the present disclosure.
FIG. 10 is a schematic diagram of a structure of a processing device according to an exemplary embodiment of the present disclosure.
FIG. 11 is a schematic diagram of a structure of a head mounted display according to an exemplary embodiment of the present disclosure.
FIG. 12 is a schematic diagram of an image processing process when an electronic device displays only a virtual view in a non-see-through mode according to an exemplary embodiment of the present disclosure.
FIG. 13 is a schematic diagram of an image processing process when an electronic device displays only an environment image in a see-through mode according to an exemplary embodiment of the present disclosure.
FIG. 14 is a schematic diagram of an image processing process when an electronic device displays an environment image and a virtual view in a see-through mode according to an exemplary embodiment of the present disclosure.

### Detailed Description

Multiple embodiments are described in the present disclosure. However, the description is exemplary and unrestrictive. Moreover, it is apparent to those of ordinary skills in the art that there may be more embodiments and implementation solutions in the scope of the embodiments described in the present disclosure. Although many possible combinations of features are shown in the accompanying drawings and discussed in specific implementations, many other combinations of the disclosed features are also possible. Unless expressly limited, any feature or element of any embodiment may be used in combination with, or may replace, any other feature or element in any other embodiment.

The present disclosure includes and conceives combinations with the features and elements known to those of ordinary skills in the art. The embodiments, features, and elements that have been disclosed in the present disclosure may also be combined with any conventional feature or element to form unique inventive solutions defined by the claims. Any feature or element of any embodiment may also be combined with a feature or an element from another inventive solution to form another unique inventive solution defined by the claims. Therefore, it should be understood that any of the features shown and/or discussed in the present disclosure may be implemented alone or in any suitable combination. Therefore, the embodiments are not to be limited except the limitations by the appended claims and equivalents thereof. Furthermore, various modifications and variations may be made within the protection scope of the appended claims.

Moreover, when describing representative embodiments, the specification may have presented a method and/or a process as a particular sequence of acts. However, to an extent that the method or the process does not depend on the specific sequence of the acts described herein, the method or the process should not be limited to the acts with the specific sequence. Those of ordinary skills in the art will understand that other sequences of acts may also be possible. Therefore, the specific sequence of the acts illustrated in the specification should not be interpreted as a limitation on claims. Moreover, claims directed to the method and/or process should not be limited to performing their acts in a described sequence, and those skilled in the art may readily understand that these sequences may be varied and still remain within the essence and scope of the embodiments of the present disclosure.

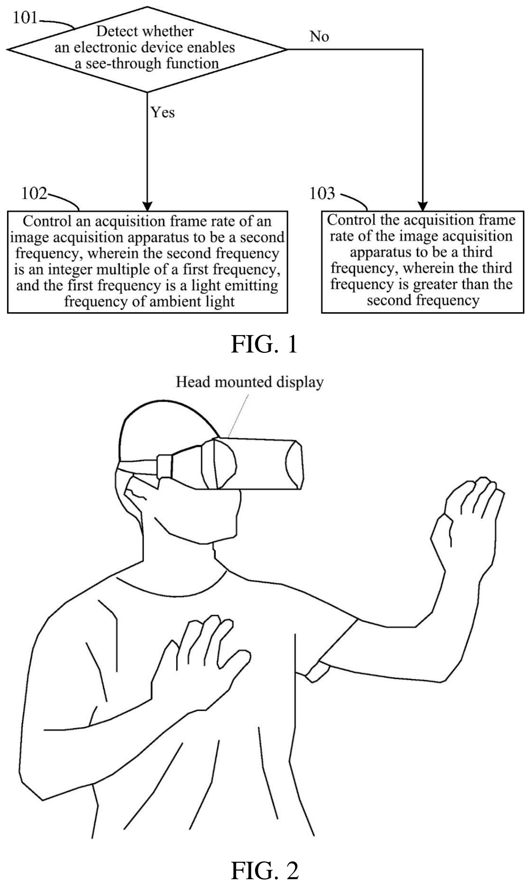

As shown in FIG. 1, an embodiment of the present disclosure provides a display method of an electronic device, the electronic device includes an image acquisition apparatus, and the method includes the following acts.

In act 101, whether the electronic device enables a see-through function is detected.

In act 102, when the electronic device enables the see-through function, an acquisition frame rate of the image acquisition apparatus is controlled to be a second frequency f2, wherein the second frequency f2 is an integer multiple of a first frequency f1, and the first frequency f1 is a light emitting frequency of ambient light.

In the embodiment of the present disclosure, the electronic device may be a head mounted display or another electronic device, and the embodiment of the present disclosure is not limited thereto.

As shown in FIG. 2, in an embodiment of the present disclosure, a head mounted display (HMD), that is, a head display, is worn on a user's head and displays an image in front of the user's eyes. The head mounted display typically is formed with a shape of goggles or a frame shape of large spectacles. The head mounted display usually includes a display apparatus and a head belt. The display apparatus has a high-resolution liquid crystal display screen or an organic light emitting diode (OLED) display screen, and is usually referred to as glasses because it is made into a shape of eyes, and is configured to display a same (or different) video picture(s) to the left eye and the right eye. The head belt is used to connect the display apparatus and wear the display apparatus on the head and face of a user.

In an embodiment of the present disclosure, a playback mode of the head mounted display may be a non-see-through mode (i.e., the see-through function is disabled), in which the head mounted display presents a 3D or 2D virtual view. The playback mode of the head mounted display may also be a see-through mode (that is, the see-through function is enabled), in which the head mounted display presents an environment image or a fusion image of the virtual view and the environment image (whether the environment image is presented or the fusion image of the virtual view and the environment image is presented may be set according to needs of the user).

In an embodiment of the present disclosure, the head mounted display may include a set of optical lenses, and a display image in front of the eyes is collimated, magnified and pulled away by the optical lenses.

In some exemplary implementations, parallax images may be provided to the left and right eyes in sequence in a time order. Since images obtained by our left and right eyes are different, a sense of space is generated in our brains, and the left and right eyes can observe images with subtle differences through the head mounted display, so as to observe a three-dimensional virtual view. In this case, assuming that a refresh rate of the head mounted display is 120 Hz, when playing frames, playback frame rates of the left and right eyes are each 60 Hz.

In some exemplary implementations, the head mounted display may include a head motion tracking sensor (not shown in FIG. 2) through which tracking at X, Y, Z axes and front and rear sides is achieved.

In some exemplary implementations, the head motion tracking sensor may include a gyroscope for measuring a turn angle of the head and an accelerometer for measuring an acceleration of the head. The gyroscope and the accelerometer may be integrated as a six-axis inertial sensor. In some other exemplary implementations, the head motion tracking sensor may further include a magnetometer, which may be used to measure a direction of the head relative to an Earth's magnetic field, and the gyroscope, accelerometer, and magnetometer may be integrated as a nine-axis sensor.

In an embodiment of the present disclosure, the head mounted display includes an image acquisition apparatus (not shown in FIG. 2), the image acquisition apparatus may be reused in the see-through mode and the non-see-through mode. In the see-through mode, the image acquisition apparatus may acquire an environment image, and transmit it to a processing device, and the processing device processes the acquired image, converts it into an image that may be perceived by humans, and presents it on a screen. In the non-see-through mode (and/or the see-through mode), the image acquisition apparatus may acquire a hand image and transmit it to the processing device, and the processing device detects an operation (including but not limited to playing video games, navigating menus, controlling media playback, and the like) performed by a user in a three-dimensional environment through a gesture recognition algorithm.

In some exemplary implementations, the image acquisition apparatus may be a Complementary Metal-Oxide-Semiconductor (CMOS) image sensor. At present, mainstream cameras and mobile phones use CMOS image sensors. Since an exposure approach of the CMOS image sensor is carried out in a row-by-row manner, and each pixel in a same row has a same exposure start point and a same exposure time, all pixels in a same row receive same light energy. However, for pixels in different rows, although the exposure time is the same, exposure start points are different, and thus, light energy received by pixels in different rows may not be the same. When the light emitting frequency of the ambient light does not match the frame rate of the image acquisition apparatus, the light energy received by pixels in different rows are different, which results in obvious flicker phenomenon, affecting adversely the use experience of the users.

In the display method of the electronic device according to the embodiment of the present disclosure, when the see-through function of the electronic device such as the head mounted display is enabled, the acquisition frame rate of the image acquisition apparatus is controlled to be a second frequency f2, wherein the second frequency f2 is an integer multiple of the first frequency f1, so that all pixel points receive the same light energy when being exposed, the problem of flicker caused by mismatch between the light emitting frequency of ambient light and the acquisition frame rate of the camera is solved, and the use experience of a user is improved.

In the embodiment of the present disclosure, the acquisition frame rate of the image acquisition apparatus refers to a quantity of frames acquired by the image acquisition apparatus per unit time. Exemplarily, assuming that the acquisition frame rate is 50 Hz, the quantity of image frames acquired by the image acquisition apparatus per second is 50 frames. The exposure time of the image acquisition apparatus refers to time required for a photosensitive element of the image acquisition apparatus to sense light during the shooting process. The higher the acquisition frame rate of the image acquisition apparatus, the shorter the exposure time thereof. The lower the acquisition frame rate of the image acquisition apparatus, the longer the exposure time thereof. The length of exposure time has a certain impact on the imaging quality. For example, if the exposure time is set too long or too short, the acquired image may become blurred (if the exposure time is set too long, the instability of the shooting subject will cause the acquired image to become blurred. If the exposure time is set too short, insufficient light energy received will also cause the acquired image to become blurred). Therefore, the acquisition frame rate of the image acquisition apparatus cannot be set too high or too low.

Exemplarily, the second frequency f2 = N * the first frequency f1, wherein, N is 1 or 2.

In the embodiment of the present disclosure, the ambient light may be natural light or artificial light.

Natural light is one of the most common light sources in our daily life. It is generated by the sun. The sun is a huge star, and its core temperature is as high as millions of degrees. Hydrogen atoms in the core of the sun undergo nuclear fusion under the action of high temperature and pressure, releasing huge energy, which radiates outward in the form of light, so that natural light is formed. Since the sun is continuously emitting light without interruption, it may be considered that its light emitting frequency is infinitely large (infinite).

Compared with the natural light, all light sources that are processed and manufactured by humans are artificial light, such as lighting and light emitting devices, etc. The lighting may include light emitted by incandescent lamps, fluorescent lamps, or LED lamps, etc. Artificial light sources such as incandescent lamps, fluorescent lamps or LED lamps usually work directly at a power supply power frequency, so their light emitting frequency is the same as the power supply power frequency. In some exemplary implementations, the first frequency f1 is preset by the electronic device according to the power supply power frequency in a region in which the electronic device is located, for example, the first frequency f1 may be the power supply power frequency. The Power supply power frequency refers to a rated frequency adopted by power generation, transmission, transformation and distribution devices and industrial and civil electrical devices in the power system, and the unit is Hertz (Hz). Some countries (such as China, India, etc.) adopt 50Hz as the power supply power frequency, and some countries (such as USA, Japan, etc.) adopt 60Hz as the power supply power frequency. For example, assuming that the electronic device is located in China, the first frequency f1 pre-stored by the electronic device is 50 Hz.

In some other exemplary implementations, the first frequency f1 is set by the electronic device according to the light emitting frequency of ambient light detected by a ambient light sensor arranged in advance. For example, when the light emitting frequency of ambient light detected by the ambient light sensor is 60 Hz, the electronic device sets the first frequency f1 to be 60 Hz.

In some exemplary implementations, before the act of controlling the acquisition frame rate of the image acquisition apparatus to be the second frequency f2, the method further includes: whether the light emitting frequency of the ambient light is the first frequency f1 is detected, and when the light emitting frequency of the ambient light is the first frequency f1, the act of controlling the acquisition frame rate of the image acquisition apparatus to be the second frequency f2 is triggered.

In some exemplary implementations, as shown in FIG. 1, the method further includes: act 103: when the electronic device does not enable the see-through function, the acquisition frame rate of the image acquisition apparatus is controlled to be a third frequency f3, wherein the third frequency f3 is greater than the second frequency f2.

Still taking the electronic device being a head mounted display as an example, when it is detected that the head mounted display does not enable (or disable) the see-through function, the acquisition frame rate of the image acquisition apparatus is controlled to be a third frequency f3, wherein the third frequency f3 is greater than the second frequency f2, so that the accuracy of gesture tracking of the head mounted display can be improved, the delay of gesture interaction can be reduced, and a control action corresponding to the gesture can be responded in time, and the smoothness of display can be ensured. In the present disclosure, the image acquisition apparatus is controlled to adopt different acquisition frame rates in the see-through mode and the non-see-through mode, to adapt to different functional requirements of different modes.

In some exemplary implementations, the method further includes: when the electronic device enables the see-through function and the light emitting frequency of the ambient light is not the first frequency f1, the acquisition frame rate of the image acquisition apparatus is controlled to be a fourth frequency f4, wherein the fourth frequency f4 is greater than the second frequency f2.

When the light emitting frequency of the ambient light is not the first frequency f1, the user may use illumination outdoors or indoors without a lamp. In this case, the acquisition frame rate of the image acquisition apparatus may be controlled to be a relatively high frame rate (or the highest frame rate) without worrying about the problem of flicker. In the embodiment of the present disclosure, the fourth frequency f4 may or may not be equal to the third frequency f3, and the embodiment of the present disclosure is not limited thereto.

In some exemplary implementations, detecting whether the electronic device enables the see-through function includes any one or more of the following: detecting whether an instruction for enabling the see-through function is received, detecting whether a user reaches a safety boundary, and detecting whether a distance between an external object and the user is less than or equal to a preset distance threshold.

Still taking the electronic device being a head mounted display as an example, in the embodiment of the present disclosure, the head mounted display enables the see-through function, which may either be manually implemented by the user or automatically triggered when certain automatic triggering conditions are met. These automatic triggering conditions include but are not limited to, the user reaches a safety boundary, a distance between an external object and the user is less than or equal to a preset distance threshold, and the like.

Accordingly, the head mounted display disables the see-through function, which may either be manually implemented by the user or automatically triggered when certain automatic triggering conditions are met. These automatic triggering conditions include but are not limited to, the user is far away from the safety boundary, the distance between an external object and the user is greater than the preset distance threshold, and the like.

In some exemplary implementations, the method further includes: acquiring a screen display frame rate of the electronic device; detecting whether a ratio of the screen display frame rate of the electronic device to the acquisition frame rate of the image acquisition apparatus is within a preset ratio range; and when the ratio of the screen display frame rate to the acquisition frame rate of the image acquisition apparatus is not within the preset ratio range, adjusting the screen display frame rate, so that the ratio of the screen display frame rate to the acquisition frame rate of the image acquisition apparatus is within the preset ratio range.

Still taking the electronic device being a head mounted display as an example, in the embodiment of the present disclosure, the screen display frame rate is a quantity of image frames displayed on the screen of the head mounted display per second. After the image acquisition apparatus acquires the images, the acquired images are transmitted to the processing device in the head mounted display, and the processing device processes the acquired images, converts them into images that can be perceived by humans, and presents them on the screen. When the acquisition frame rate of the image acquisition apparatus is less than the screen display frame rate of the head mounted display, there will be a problem that the environment image has not been incoming when the screen is refreshed. Therefore, in the embodiment of the present disclosure, the acquisition frame rate of the image acquisition apparatus should be greater than or equal to the screen display frame rate, that is, the ratio of the screen display frame rate to the acquisition frame rate of the image acquisition apparatus should be within a preset ratio range, and the preset ratio range is less than or equal to 1. Exemplarily, the preset ratio range may be [1/2, 1], but the present disclosure is not limited thereto.

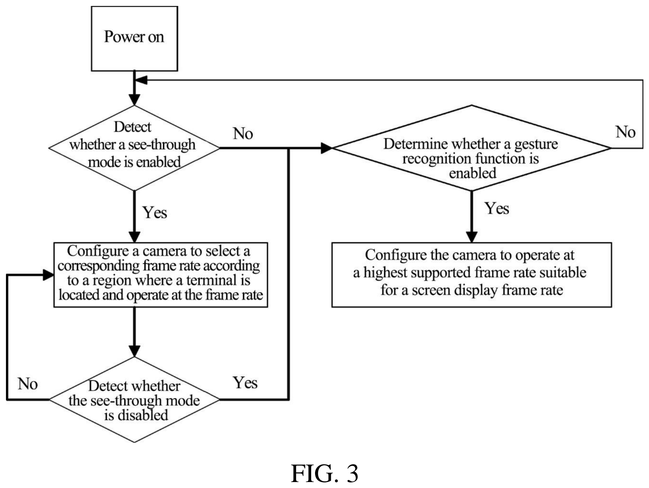

In some exemplary implementations, as shown in FIG. 3, an embodiment of the present disclosure also provides a display method, including: detecting whether a see-through mode is enabled; when the see-through mode is enabled, determining a corresponding power supply power frequency according to a current region (for example, 50Hz is selected in China), and configuring the acquisition frame rate of the image acquisition apparatus (for example, a camera) to run with the determined power supply power frequency (or an integer multiple of the power supply power frequency).

In the embodiment of the present disclosure, after the electronic device is turned on, it is detected whether the see-through mode is enabled. When the see-through mode is enabled, the acquisition frame rate of the image acquisition apparatus may be directly controlled according to the power supply power frequency in the current region (in the foregoing embodiment, the acquisition frame rate of the image acquisition apparatus is controlled according to the light emitting frequency of ambient light). Since the head mounted display is generally used under indoor lighting conditions, the acquisition frame rate of the image acquisition apparatus is directly controlled according to the power supply power frequency in the current region, and such setting is simpler and more efficient, thereby simplifying device requirements. In the see-through mode, it is further determined that whether the electronic device disables the see-through mode.

In some exemplary implementations, as shown in FIG. 3, the method further includes: when the see-through mode is not enabled (or disabled), whether a gesture recognition function is enabled is determined; and when the gesture recognition function is enabled, the acquisition frame rate of the image acquisition apparatus is controlled to be a third frequency f3, wherein the third frequency f3 is greater than the second frequency f2.

In the embodiment of the present disclosure, in the non-see-through mode, when the gesture recognition function is enabled, the acquisition frame rate of the image acquisition apparatus is configured to operate at a relatively high frame rate or a highest frame rate suitable for a screen display frame rate, so as to improve the accuracy of gesture tracking of the head mounted display and reduce delay of gesture interaction, thereby timely response to the control action corresponding to the gesture.

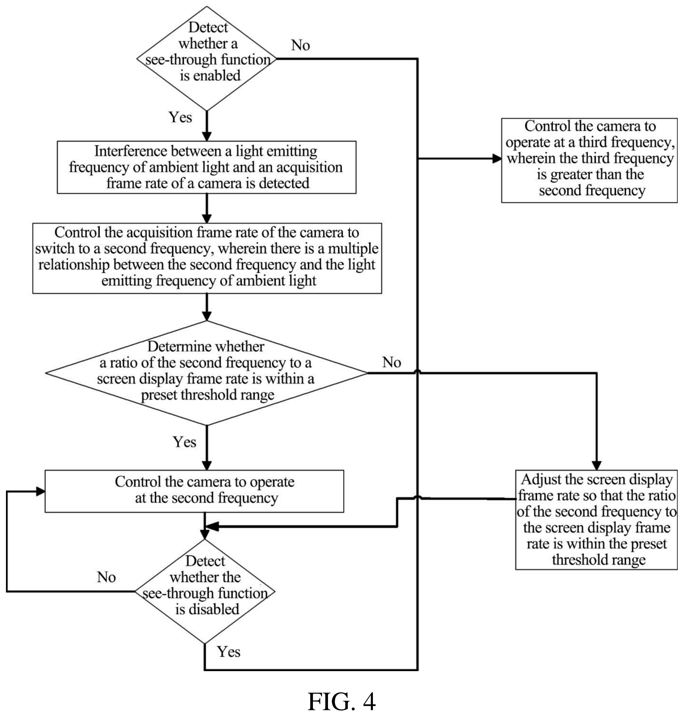

In some exemplary implementations, as shown in FIG. 4, an embodiment of the present disclosure also provides a display method, including:
whether the see-through function is enabled is detected; and
when the see-through function is enabled, whether there is interference between the light emitting frequency of the ambient light and the acquisition frame rate of the image acquisition apparatus is detected; when there is interference between the light emitting frequency of the ambient light and the acquisition frame rate of the image acquisition apparatus, the acquisition frame rate of the image acquisition apparatus is controlled to switch to a second frequency f2, wherein the second frequency f2 is an integer multiple of the light emitting frequency of the ambient light.

In the embodiment of the present disclosure, detecting whether there is interference between the light emitting frequency of the ambient light and the acquisition frame rate of the image acquisition apparatus refers to detecting whether the ambient light is unnatural light and whether the acquisition frame rate of the image acquisition apparatus is not an integer multiple of the light emitting frequency of the ambient light. When the ambient light is unnatural light and the acquisition frame rate of the image acquisition apparatus is not an integer multiple of the light emitting frequency of the ambient light, there is interference between the light emitting frequency of the ambient light and the acquisition frame rate of the image acquisition apparatus.

In the embodiment of the present disclosure, when it is detected that the condition of enabling the see-through mode is satisfied (for example, the see-through function is manually enabled, or the user reaches a safe boundary, the external object is within a predetermined distance range from the wearer, etc.), the ambient light sensor sends the detected light emitting frequency of the ambient light to the processing device. At the same time, the processing device receives the acquisition frame rate of the image acquisition apparatus. Based on the received light emitting frequency of the ambient light and the acquisition frame rate of the image acquisition apparatus, the processing device determines a matching situation between the two (i.e., determining whether there is interference between the two). When the light emitting frequency of the ambient light and the acquisition frame rate of the image acquisition apparatus do not meet a preset matching relationship with (for example, the two are not equal or the acquisition frame rate is not an integer multiple of the light emitting frequency), the acquisition frame rate of the image acquisition apparatus is controlled to switch to a second frequency f2, so that the second frequency f2 and the light emitting frequency of the ambient light meet the preset matching relationship. For example, when it is detected that the user wearing the terminal device is indoors and uses a lamp for illumination, and the acquisition frame rate of the image acquisition apparatus is 70 Hz, a flicker phenomenon may occur due to the mismatch between the two. The acquisition frame rate of the image acquisition apparatus is switched to the second frequency, for example, assuming that the power supply power frequency is 50 Hz, the acquisition frame rate of the image acquisition apparatus may be switched to 50 Hz.

The processing device receives the current screen display frame rate, determines whether a ratio of the second frequency f2 to the screen display frame rate is within a preset range (or determines whether the second frequency f2 is greater than or equal to the current screen display frame rate), and if the ratio is within the preset range (or the second frequency f2 is greater than or equal to the current screen display frame rate), the image acquisition apparatus is controlled to operate at the second frequency f2. When the ratio of the second frequency f2 to the screen display frame rate is not within the preset range (or the second frequency f2 is less than the current screen display frame rate), the screen display frame rate is adjusted, so that the ratio of the second frequency f2 to the screen display frame rate is within the preset range (or the second frequency f2 is greater than or equal to the screen display frame rate). Whether the see-through function is disabled is detected.

When it is detected that a user wearing the terminal device is outdoors or indoor without lighting for illumination, the processing device determines that the light emitting frequency of the current ambient light is not the power supply power frequency according to the detected emitting frequency of the ambient light, and in this case, the image acquisition apparatus may be controlled to acquire images at a frame rate higher than the second frequency, for example, the acquisition frame rate of the image acquisition apparatus may be controlled to be 70 Hz or 80 Hz, etc.

When it is detected that the see-through function is not enabled, the image acquisition apparatus is controlled to operate at a third frequency f3, wherein the third frequency f3 is greater than the second frequency f2.

When it is detected that the see-through function is disabled (the see-through function is disabled from an enabled state, a condition for disabling see-through function is determined according to a condition for enabling see-through function, when it is detected that the wearer is retreats within a safe range, the see-through function is disabled, or the see-through function may also be disabled manually, etc.), the image acquisition apparatus is controlled to operate at a third frequency f3, wherein the third frequency f3 is larger than the second frequency f2, and the current screen display frame rate is detected. If a ratio of the third frequency f3 to the screen display frame rate is not within the preset range, the screen display frame rate is adjusted, so that a ratio of the adjusted screen display frame rate to the current acquisition frame rate is within the preset ratio range, thereby improving the accuracy of gesture tracking of the terminal device, reducing delay of gesture interaction, and meeting the needs of users for display images.

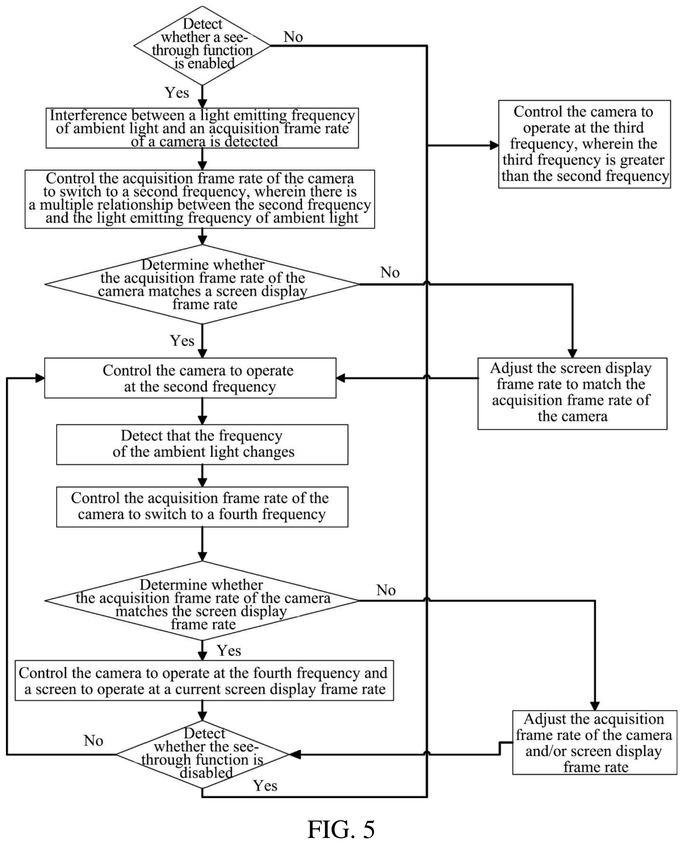

In some other exemplary implementation modes, as shown in FIG. 5, the method further includes: in the see-through mode, whether the frequency of ambient light changes is detected; and when the frequency of the ambient light changes, the acquisition frame rate of the image acquisition apparatus is controlled to switch to a fourth frequency f4, wherein the fourth frequency f4 is larger than the second frequency f2.

In the embodiment of the present disclosure, when it is detected that the light emitting frequency of ambient light changes, the acquisition frame rate of the image acquisition apparatus is switched to the fourth frequency f4, wherein the fourth frequency f4 is greater than the second frequency f2, a scene corresponding to which includes it is detected that the wearer has moved from indoors to outdoors or turned off the light indoors, so that an update rate of the external environment can be improved and an external scene can be obtained in time.

In the embodiment of the present disclosure, after the acquisition frame rate of the image acquisition apparatus is switched to the fourth frequency f4, the method further comprises: whether the fourth frequency f4 matches the current screen display frame rate is determined (for example, whether a ratio of the current screen display frame rate to the fourth frequency f4 is within a preset ratio range, or whether the fourth frequency f4 is greater than or equal to the current screen display frame rate). When the fourth frequency f4 does not match the current screen display frame rate, the current screen display frame rate is adjusted, so that the fourth frequency f4 matches the adjusted screen display frame rate. Or, the acquisition frame rate of the image acquisition apparatus is adjusted, so that the adjusted acquisition frame rate matches the current screen display frame rate.

Exemplarily, assuming that the current screen display frame rate is a seventh frequency f5, the acquisition frame rate of the image acquisition apparatus is the fourth frequency f4, an optional screen display frame rate further includes the eighth frequency f6, an optional image acquisition frame rate of the image acquisition apparatus further includes the fifth frequency f7, etc. When the fourth frequency f4 is greater than or equal to the current screen display frame rate f5, the image acquisition apparatus is controlled to operate at the fourth frequency f4, and the screen is controlled to operate at the current screen display frame rate f5. When the fourth frequency f4 is less than the current screen display frame rate f5, the image acquisition apparatus is controlled to operate at the fifth frequency f7, wherein f7 is greater than f4 and f7 is less than f5. Or, the screen display frame rate is controlled to operate at the eighth frequency f6, and the acquisition frame rate of the image acquisition apparatus is the fourth frequency f4, wherein f6 is less than f5 and f4 is greater than f6.

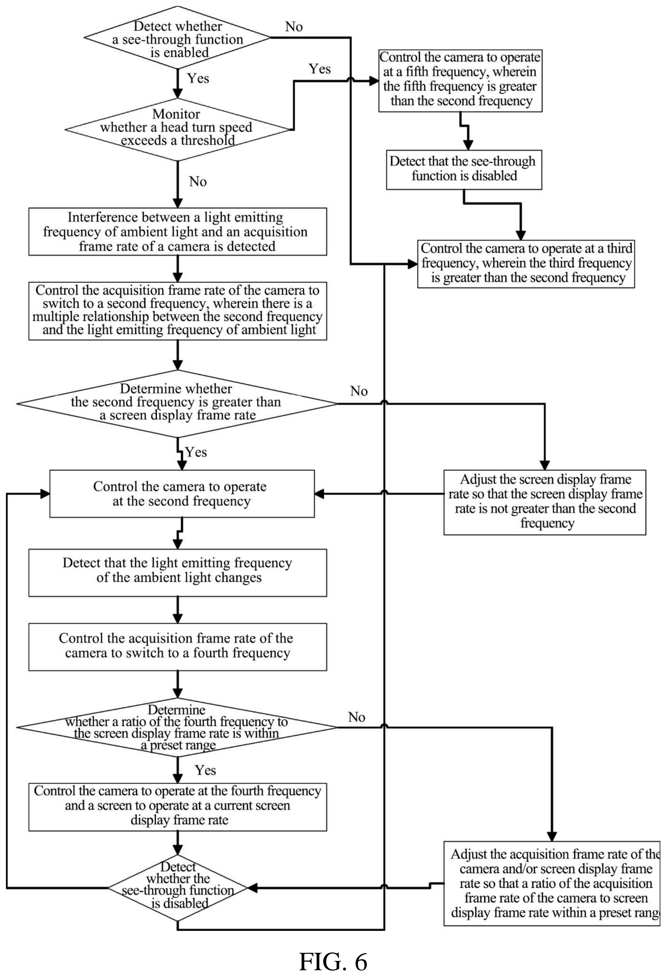

In some other exemplary implementations, as shown in FIG. 6, the method further includes:
when the electronic device has enabled the see-through function, whether a head movement speed is greater than or equal to a preset movement threshold is detected;
when the head movement speed is greater than or equal to the preset movement threshold, the acquisition frame rate of the image acquisition apparatus is controlled to be a fifth frequency f7, wherein the fifth frequency f7 is greater than the second frequency f2; and
the act of detecting the light emitting frequency of the ambient light is triggered when the head movement speed is less than the preset movement threshold.

In a 3D playback mode, by turning the head, the user may observe every corner of the virtual view and/or the surrounding environment at will. This feature of free observation is closer to the observation experience in the real world. When it is detected that the head turn speed exceeds a certain speed (i.e., it is detected that the turn speed exceeds a preset motion threshold value), the image acquisition apparatus is controlled to operate at a fifth frequency f7, wherein the fifth frequency f7 is greater than the second frequency f2 (in the process of acquiring images from the camera system to finally displaying them on the screen during motion, it is needed to perform the acts of acquiring, processing, and rendering, and thus in order to prevent the pictures from stuck, the acquisition frame rate of the camera, that is, the fifth frequency f7, needs to be greater than the second frequency f2. In addition, the fifth frequency f7 is greater than or equal to the current screen display frame rate), thereby increasing the frequency of acquiring the external scene meets the matching with the head turn speed, preventing the picture stuck phenomenon caused by too fast head turn. The head turn speed is monitored in real time, and once it is detected that the head turn speed is lower than the preset motion threshold within the preset time, it is switched to the act of detecting whether there is interference between the light emitting frequency of ambient light and the acquisition frame rate of the camera.

In some exemplary implementations, the method further includes:
when the electronic device does not enable the see-through function, acquiring a frame rate recommended by an application;
when the frame rate recommended by the application is less than or equal to the third frequency f3, controlling the acquisition frame rate of the image acquisition apparatus to be the frame rate recommended by the application; and
when the frame rate recommended by the application is greater than the third frequency f3, controlling the acquisition frame rate of the image acquisition apparatus to be a sixth frequency, wherein the sixth frequency is less than the frame rate recommended by the application.

In the non-see-through mode, a process of gesture interaction between different applications is generally different. In the non-see-through mode, the acquisition frame rate of the image acquisition apparatus determined by the processing device is the third frequency f3, while the third frequency f3 may be different from the frame rate recommended by the application. The frame rate recommended by the application may be greater than, equal to, or less than the third frequency.

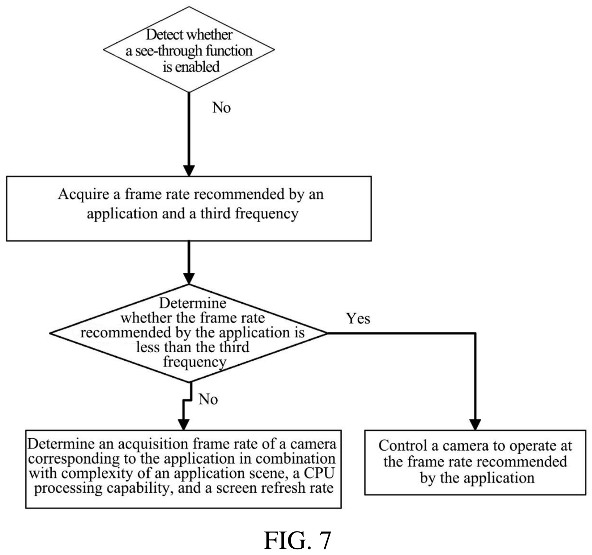

As shown in FIG. 7, when the frame rate recommended by the application is less than the third frequency f3, the image acquisition apparatus is controlled to operate at the frame rate recommended by the application, the processing load of the processing device is reduced, and the specific frame rate corresponding to the camera required for the gesture interaction process can be determined according to the specific application. For example, when frame rates supported by the camera are 50 Hz, 60 Hz, and 70 Hz (the highest frame rate supported by the camera is 70Hz), and the frame rate recommended by the application is 60 Hz, then the camera is controlled to operate at 60Hz. When the frame rate recommended by the application is greater than the third frequency f3, the processing device determines the frame rate of camera corresponding to the application in combination with complexity of an application scene, a CPU processing capability, and a screen refresh rate.

For example, assuming that the acquisition frame rates supported by the image acquisition apparatus (such as a camera) are 50 Hz, 60 Hz, 70 Hz, 80 Hz, 90 Hz, and 100 Hz, and in one application, the acquisition frame rate recommended by the application is 120 Hz, the processing device determines the frame rate of the camera corresponding to the application in combination with complexity of an application scene, a CPU processing capability, and a screen refresh rate. Assuming that the processing device determines that the suitable frame rate of the camera is 90 Hz in combination with the complexity of the application scene, the CPU processing capability, and the screen refresh rate, the camera is controlled to operate at the frame rate of 90 Hz. In another application, the frame rate of recommended by the application is 110 Hz, and the processing device determines that the suitable frame rate of the camera is 100Hz based on the complexity of the application scene, the CPU processing capability and screen refresh rate, and the camera is controlled to operate at the frame rate of 100Hz.

In some exemplary implementations, the method further includes:
acquiring a maximum screen display frame rate, and when the maximum screen display frame rate is greater than the frame rate recommended by the application, adjusting the acquisition frame rate of the image acquisition apparatus to a frame rate recommended by the application; and
when the maximum screen display frame rate is less than the frame rate recommended by the application, performing data statistics according to data amount acquired by the image acquisition apparatus and data amount to be displayed on a display screen, and determining the acquisition frame rate of the image acquisition apparatus and the screen display frame rate according to a statistical result.

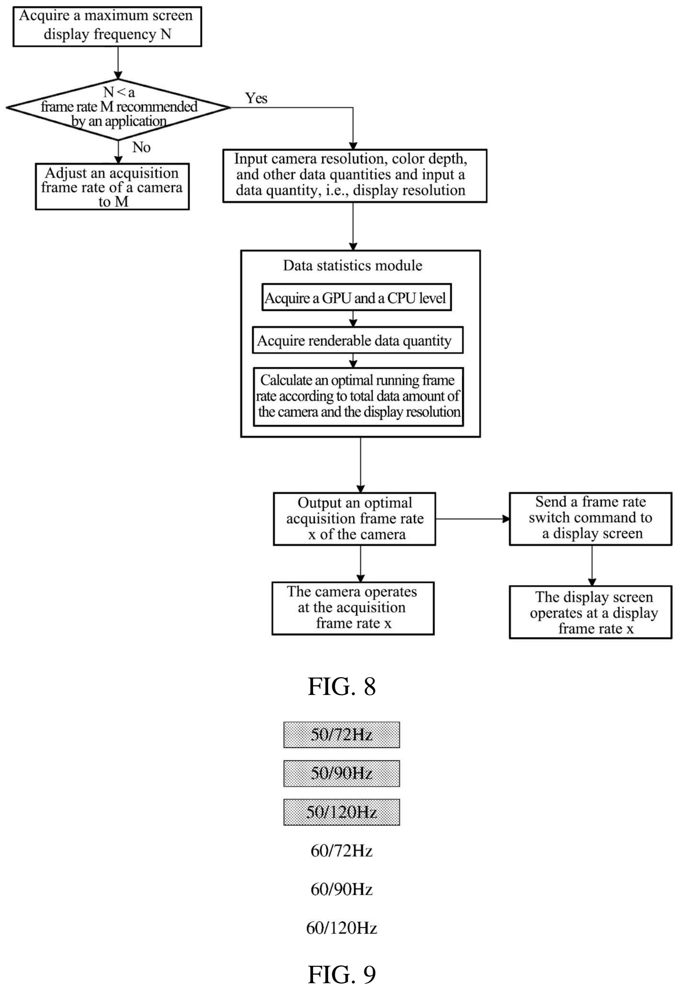

Exemplarily, as shown in FIG. 8, assuming that the acquired maximum screen display frame rate is N, when N is greater than the frame rate M recommended by the application, it indicates that the system frame rate cannot render data amount exceeding a current total display amount. In this case, the acquisition frame rate of the image acquisition apparatus is adjusted to the frame rate M recommended by the application (the screen display frame rate also uses the frame rate M recommended by the application).

When N is less than the frame rate M recommended by the application, parameters of the camera and display are input to the data statistics module to perform data statistics, and an optimal frame rate x executable by the current system is output according to total data amount of the display and the camera. A design principle of the data statistics module is to calculate an optimal running frame rate by combining a current CPU/GPU level and total data amount that can be rendered. As described above, after the optimal running frame rate is obtained, the processing device sends a frame rate switching command to the display screen, and finally the image acquisition apparatus and the display screen run at a same frame rate.

In some exemplary implementations, the second frequency is selected and generated by the user according to a first selectable frame rate of the electronic device, or the second frequency is generated by the processing device based on the power supply frequency in a region where the electronic device is located, wherein the first selectable frame rate of the electronic device includes at least one second frequency recommended frame rate, and the second frequency recommended frame rate is consistent with the power supply power frequency of the region where the electronic device is located.

In some exemplary implementations, the third frequency is selected and generated by the user according to a second selectable frame rate of the electronic device, or the third frequency is generated by the processing device based on a load condition of the electronic device.

In the embodiment of the present disclosure, the user may manually set the third frequency and the second frequency of the image acquisition apparatus, for example, the user may select 50Hz/90Hz, 50Hz/72Hz, 50/120 Hz, 60Hz/90Hz, 60Hz/72Hz, 60/120 Hz, etc., wherein the number before "/" represents an acquisition frame rate of the image acquisition apparatus in the see-through mode, and the number after "/" represents an acquisition frame rate of the image acquisition apparatus in the non-see-through mode. For example, 50 Hz/90 Hz represents that the image acquisition apparatus operates at an acquisition frame rate of 50 Hz in the see-through mode, and operates at an acquisition frame rate of 90 Hz in the non-see-through mode; 60Hz/90Hz represents that the camera operates at an acquisition frame rate of 60Hz in see-through mode and operates at an acquisition frame rate of 90Hz in non-see-through mode; and similarly to others.

In the embodiment of the present disclosure, the electronic device may recommend an acquisition frame rate in the see-through mode according to the power supply power frequency in the current region. For example, in China, when the user makes a selection, three options of 50Hz/90Hz, 50Hz/72Hz, and 50/120 Hz are set to be gray, so as to recommend the user to select a suitable acquisition frame rate from the three options first. When the electronic device moves to a region where another power supply power frequency is located, the acquisition frame rate recommended by the electronic device may change accordingly. For example, in the United States, three options of 60Hz/90Hz, 60Hz/72Hz, and 60/120 Hz are set to be gray to recommend users to select an appropriate acquisition frame rate from these three options first. The second optional frame rate includes numerical values of 90 Hz, 72 Hz, and 120 Hz. Of course, the present disclosure only takes these numerical values as examples for illustrative description, and the electronic device may recommend other frequency values as needed, or may generate a value of the third frequency according to its own load condition (the load condition may include a screen display capability of the electronic device, image acquisition capability of the electronic device, frame rate recommended by an application, and so on).

An embodiment of the present disclosure further provides a processing device, which may include a processor, and a memory storing a computer program that is runnable on the processor, wherein when the processor executes the computer program, acts of the display method according to any one of the preceding items in the present disclosure are implemented.

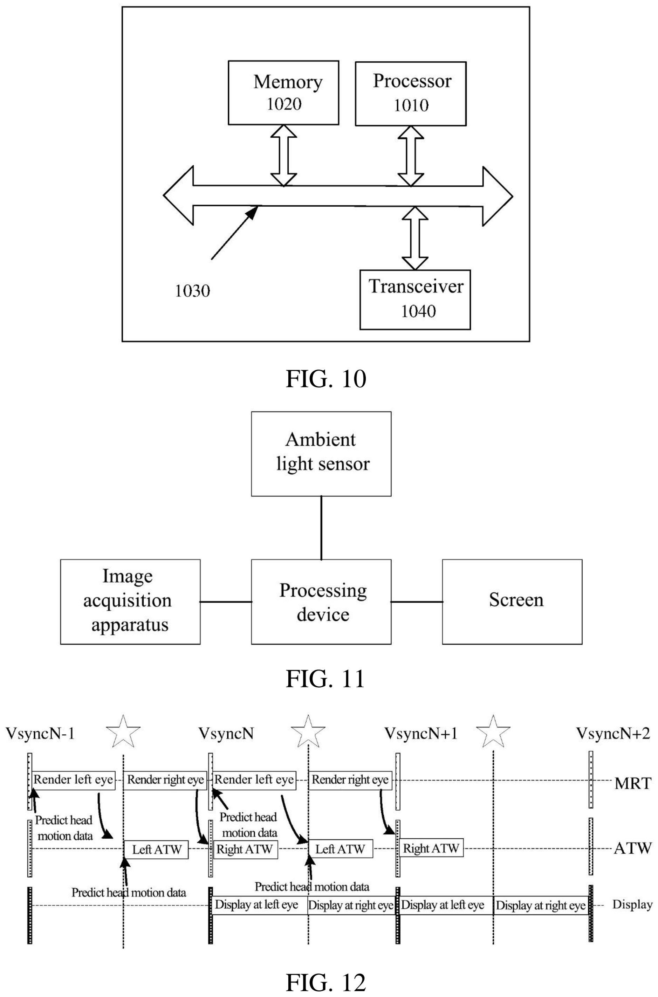

As shown in FIG. 10, in an example, a processing device may include: a processor 1010, a memory 1020, a bus system 1030, and a transceiver 1040. The processor 1010, the memory 1020, and the transceiver 1040 are connected via the bus system 1030, the memory 1020 is configured to store instructions, and the processor 1010 is configured to execute the instructions stored in the memory 1020 to control the transceiver 1040 to send signals. Specifically, the transceiver 1040 may receive a light emitting frequency of ambient light detected by an ambient light sensor under control of the processor 1010, the processor 1010 detects whether an electronic device enables a see-through function, and when the electronic device enables the see-through function, controls an acquisition frame rate of an image acquisition apparatus to be a second frequency, wherein the second frequency is an integer multiple of a first frequency, and the first frequency is the light emitting frequency of the ambient light.

It should be understood that the processor 1010 may be a Central Processing Unit (CPU), or the processor 1010 may be another general-purpose processor, a Digital Signal Processor (DSP), an Application Specific Integrated Circuit (ASIC), a Field Programmable Gate Array (FPGA) or another programmable logic device, a discrete gate or a transistor logic device, a discrete hardware component, etc. The general-purpose processor may be a microprocessor, or the processor may be any conventional processor, etc.

The memory 1020 may include a read only memory and a random access memory, and provides instructions and data to the processor 1010. A portion of the memory 1020 may further include a non-volatile random access memory. For example, the memory 1020 may further store information of a device type.

The bus system 1030 may further include a power bus, a control bus, a status signal bus, or the like in addition to a data bus. However, for the sake of clarity, various buses are all labeled as the bus system 1030 in FIG. 10.

In an implementation process, processing performed by a processing device may be completed through an integrated logic circuit of hardware in the processor 1010 or instructions in a form of software. That is, acts of the methods in the embodiments of the present disclosure may be embodied as executed by a hardware processor, or executed by a combination of hardware in the processor and a software module. The software module may be located in a storage medium such as a random access memory, a flash memory, a read only memory, a programmable read only memory or an electrically erasable programmable memory, a register. The storage medium is located in the memory 1020, and the processor 1010 reads information in the memory 1020 and completes the acts of the foregoing methods in combination with its hardware. In order to avoid repetition, detailed description is not provided here.

An embodiment of the present disclosure also provides an electronic device including an ambient light sensor, a display screen, an image acquisition apparatus, and a processing device. The processing device may be a processing device as described in any embodiment of the present disclosure. The ambient light sensor is configured to detect a light emitting frequency of ambient light. The image acquisition apparatus is configured to acquire an environment image and/or a hand image in a see-through mode, and acquire a hand image in a non-see-through mode, and transmit the acquired image(s) to the processing device.

In the embodiment of the present disclosure, the electronic device may be a head mounted display or another electronic device, and the embodiment of the present disclosure is not limited thereto.

In an exemplary embodiment, the head mounted display may also include a head movement tracking sensor. With the head motion tracking sensor, tracking at X, Y, Z axes and front and rear sides is achieved.

A graphics card of an existing VR display device is responsible for rendering VR images, and a display is responsible for displaying the VR images rendered by the graphics card. The faster a rendering speed of the graphics card, the higher the frame rate of the VR images, and the more VR images the graphics card transmits to the display. When a refresh rate of the display is relatively high, the more VR images the display displays. Specifically, when the frame rate of the image is higher than the refresh rate, the speed at which the graphics card outputs frames is higher than the refresh speed of the display, resulting in that the display is unable to process the output image frames in time, causing the images of frames displayed on the display to be torn. At the same time, when the display cannot process the output image frames in time, the VR images output by the graphics card can't be completely displayed by the display, resulting in the problem of frame loss. For example, when the graphics card renders 100 images per second (100 images per second), but the display can only display 60 images per second (the refresh rate of the display is 60Hz), then the user can only see the 60 images rendered by the graphics card, and the remaining 40 images are not displayed by the display, which means that the graphics card has done some useless work to some extent, resulting in the problem of frame loss on the displayed images. When the frame rate of the image is lower than the refresh rate, the display can not only fully display the VR images rendered by the graphics card, but also one frame of image is displayed by at least two consecutive frames on the display. This phenomenon is called "image jitter phenomenon". Therefore, when the refresh rate of the display matches the frame rate of the VR images, the screen can display smooth VR images, and provide users with a better visual experience.

In order to cooperate with certain scenes displayed in the immersive environment provided by the VR display device, the user may interact with the VR display device through head motion, so that the user can enjoy a real use experience. Due to the limitation of the rendering capability of the graphics processor of the VR display device, when some scenes displayed in the immersive environment are relatively complex, if the user's head moves at a relatively fast speed and the frame rate of the images is lower than the refresh rate, an image jitter phenomenon occurs, the image displayed on the display have a delay problem. For example, when the user keeps the head stationary, the image jitter phenomenon does not bring discomfort to the user. When the user's head is turned from an old position to a new position, the image jitter phenomenon causes a current frame image displayed by the display is still an image of the user's head in the old position, in such case, the user's brain reaction has switched to the new position, but image information received by the eyes is still image information of the old position, so the image information received by the eyes does not match the image information recognized by the brain, which will cause the user to feel dizzy. Moreover, the greater the head turn angle, the stronger the dizziness will be.

Time warp (TW) is a technique for correcting image frames, which obtains a current frame image by warping a previous frame image, and transmits the obtained current frame image to a display, to reduce head dizziness caused by the image delay problem. Generally speaking, the way used in warp processing is direction-based warp processing technology, which may correct a changed posture due to head turn. Such warp processing technology has obvious warp effect on two-dimensional images, and does not need to occupy too many system resources. For example, for a complex scene, the direction-based warp processing technique may generate a current frame image based on less data processing amount. Specifically, before the current frame vertical synchronization signal is received, the graphics card needs to complete TW processing of the previous frame image to obtain the current frame image, so as to ensure that the display may display the current frame image after the current frame synchronization signal is received, thus avoiding the image delay problem during head turn. That is, in one frame image rendering time, a rendering operation (rendering operation) and TW processing operation (TW operation) of the current frame image need to be sequentially completed in order to ensure that the display may display the current frame image subjected to TW processing in the next frame.

The image rendering process and the time warping process in the existing TW technology are carried out in a same thread, which causes that the image rendering process and the time warping process cannot be carried out simultaneously, and if the performance of the graphics card is relatively low, the graphics card cannot sequentially complete the rendering operation and the TW processing operation of the current frame image within one frame rendering time. People have improved the TW technology, and Asynchronous TimeWarp (ATW) technology is an intermediate frame generation technology, which can not only reduce image delay and solve the problem of head dizziness, but also can complete the rendering operation and the TW processing operation of the current frame image in one frame rendering time when the performance of the graphics card is relatively low. Specifically, the ATW technology puts the rendering operation and the TW operation in two threads to adapt to the performance of the graphics card, avoid image delay, so as to reduce image jitter. A thread, where the rendering operation is, is defined as a rendering thread (MRT thread), and a thread where the ATW operation is, is defined as an asynchronous time warp thread (ATW thread).

In some exemplary implementations, when the electronic device enables the see-through function and simultaneously displays the environment image and the virtual view, the electronic device starts a camera thread, a rendering thread, and an asynchronous time warp thread.

At a first starting time point, the camera thread acquires image data acquired by the image acquisition apparatus and sends the image data to the asynchronous time warp thread.

At the first starting time point, the rendering thread renders first screen scene data based on first predicted user pose data, sends the rendered first screen scene data to the asynchronous time warp thread at a first intermediate time point, and renders second screen scene data based on second predicted user pose data, and sends the rendered second screen scene data to the asynchronous time warp thread at a first display time point.

At the first intermediate time point, the asynchronous time warp thread performs a fusion operation on the first screen scene data and the image data and performs correction based on third predicted user pose data to obtain first screen output data; at the first display time point, outputs the first screen output data to a display screen for display, performs a fusion operation on the second screen scene data and image data and performs correction based on the third predicted user pose data to obtain second screen output data; and at a second display time point, outputs the second screen output data to the display screen for display, wherein the first intermediate time point is located between the first starting time point and the first display time point, and the first display time point is located between the first intermediate time point and the second display time point.

Exemplarily, the first starting time point may be a starting time point of a current frame, the first intermediate time may be an intermediate time point between the current frame and a next frame, the first display time point may be a starting time point of a next frame, and the second display time point may be an intermediate time point between the next frame and a frame after the next frame.

In the embodiment of the present disclosure, the first predicted user pose data is user pose data at the first display time point predicted based on user pose data at the first starting time point, the second predicted user pose data is user pose data at the second display time point predicted based on user pose data at a first intermediate time point, and the third predicted user pose data is user pose data at the first display time point predicted based on user pose data at the first intermediate time point.

In some exemplary implementations, when the electronic device enables the see-through function and only displays the environment image, the electronic device starts a rendering thread and an asynchronous time warp thread.

At a second starting time point, the rendering thread acquires image data acquired by the image acquisition apparatus, and sends the image data to the asynchronous time warp thread.

At a second intermediate time point, the asynchronous time warp thread corrects the image data based on fourth predicted user pose data, and at a third display time point, outputs the corrected data to a display screen for display, wherein the second intermediate time point is located between the second starting time point and the third display time point.

Exemplarily, the second starting time point may be a starting time point of the current frame, the second intermediate time point may be an intermediate time point between the current frame and a next frame, and the third display time point may be a starting time point of the next frame.

In the embodiment of the present disclosure, the fourth predicted user pose data is user pose data at the third display time point predicted based on the user pose data at the second intermediate time point.

In some exemplary implementations, when the electronic device disables the see-through function and only displays the virtual view, the electronic device starts a rendering thread and an asynchronous time warp thread.

At a third starting time point, the rendering thread renders first screen scene data based on fifth predicted user pose data; at a third intermediate time point, sends the rendered first screen scene data to the asynchronous time warp thread, and renders second screen scene data based on sixth predicted user pose data; and at a fourth display time point, sends the rendered second screen scene data to the asynchronous time warp thread.

At the third intermediate time point, the asynchronous time warp thread corrects the rendered first screen scene data based on seventh predicted user pose data to obtain first screen output data; at the fourth display time point, outputs the first screen output data to a display screen for display, and corrects the rendered second screen scene data based on the seventh predicted user pose data to obtain second screen output data; and at a fifth display time point, outputs the second screen output data to the display screen for display, wherein the third intermediate time point is located between the third starting time point and the fourth display time point, and the fourth display time point is located between the third intermediate time point and the fifth display time point.

Exemplarily, the third starting time point may be a starting time point of a current frame, the third intermediate time point may be an intermediate time point between the current frame and a next frame, the fourth display time point may be a starting time point of a next frame, and the fifth display time point may be an intermediate time point between the next frame and a frame after the next frame.

In the embodiment of the present disclosure, the fifth predicted user pose data is user pose data at the fourth display time point predicted based on user pose data at the third starting time point, the sixth predicted user pose data is user pose data at the fifth display time point predicted based on user pose data at the third intermediate time point, and the seventh predicted user pose data is user pose data at the fourth display time point predicted based on user pose data at the third intermediate time point.

In the embodiment of the present disclosure, "first", "second", and "third" in the first starting time point, the second starting time point, and the third starting time point are only for distinguishing different embodiments, and there is no temporal sequential relationship among the three time points. Similarly, "first", "second" and "third" in the first intermediate time point, the second intermediate time point, and the third intermediate time point are only for distinguishing different embodiments, and there is no temporal sequential relationship between the three time points. Further, although the second display time point is located after the first display time point and the fifth display time point is located after the fourth display time point, "first", "third" and "fourth" in the first display time point, the third display time point, and the fourth display time point are merely to distinguish different embodiments, and there is no temporal sequential relationship between the three time points.

FIG. 12 to FIG. 14 show schematic diagrams of image processing procedures based on ATW according to the embodiment of the present disclosure. Herein, VsyncN-1, VsyncN, VsyncN+1, and VsyncN+2 represent a vertical synchronization signal of an (N-1)-th frame, a vertical synchronization signal of an N-th frame, a vertical synchronization signal of an (N-1)-th frame, a vertical synchronization signal of an N-th frame, a vertical synchronization signal of an (N+1)-th frame, and a vertical synchronization signal of an (N+2)-th frame, respectively. A time point at which the vertical synchronization signal of the (N-1)-th frame is received is defined as a starting time point of the (N-1)-th frame, a time point at which the vertical synchronization signal of the N-th frame is received is defined as an end time point of the (N-1)-th frame or a starting time point of the N-th frame, a time point at which the vertical synchronization signal of the (N+1) frame is received is defined as an end time point of the N-th frame or a starting time pointof the (N+1)-th frame, and a time point at which the vertical synchronization signal of the (N+2)-th frame is received is defined as an end time point of the (N+1)-th frame or a starting time point of the (N+2)-th frame.

An intermediate time point between the starting time point of the (N-1)-th frame and the end time point of the (N-1)-th frame is defined as an intermediate time point of the (N-1)-th frame. An intermediate time point between the starting time point of the N-th frame and the end time point of the N-th frame is defined as an intermediate time point of the N-th frame. An intermediate time point between the starting time point of (N+1)-th frame and the end time point of the (N+1)-th frame is defined as an intermediate time point of the (N+1)-th frame.

FIG. 12 is a schematic diagram of an image processing process when only a virtual view is displayed in a non-see-through mode. As shown in FIG. 12, at the starting time point of the (N-1)-th frame (or the starting time point of the N-th frame), a rendering thread renders first screen scene data based on user pose data at a display time point (that is, 1.5 frames later), at the intermediate time point of the (N-1)-th frame (or the intermediate time point of the N-th frame), sends the rendered first screen scene data to the asynchronous time warp thread, and renders second screen scene data based on the user pose data at the display time point (that is, 1.5 frames later), and sends the rendered second screen scene data to the asynchronous time warp thread, and at the startomg time point of the N-th frame (or the starting time point of the (N+1)-th frame), sends the rendered second screen scene data to the asynchronous time warp thread.

The asynchronous time warp thread receives the rendered first screen scene data at intermediate time point of the the (N-1)-th frame (or the intermediate time point of the Nth frame), corrects the rendered first screen scene data based on user pose data at a display time point (that is, 1 frame later) to obtain first screen scene output data, and outputs the first screen scene output data to the display screen for display at the end time point of the (N-1)-th frame (or the end time point of the Nth frame) after completing the correction; after receiving the rendered second screen scene data at the end time point of the (N-1)-th frame (or the end time point of the N-th frame), corrects the rendered second screen scene data based on user pose data at the display time point (that is, 1 frame later) to obtain second screen scene output data, and after completing the correction, at the intermediate time point of the N-th frame (or the intermediate time point of the (N+1)-th frame), outputs the second screen scene output data to the display screen for display.

Optionally, the first screen may be a screen that displays images seen by the left eye of the user, and the second screen may be a screen that displays images seen by the right eye of the user. The first screen scene data may include various parameters of an object that should be presented in a field of view of the user's left eye, while the second screen scene data may include various parameters of an object that should be presented in a field of view of the user's right eye. As described above, meanings of the first screen and the second screen may be interchangeable, and the first screen and the second screen may be various types of display screens, for example, a liquid crystal display screen (LCD), an organic light emitting diode display screen (OLED), a micro light emitting diode (Micro-LED) display screen, or the like. These display apparatuses refresh one frame of the display image by, for example, progressive scanning or the like.

In order to enable an image presented by a virtual reality device to be all objects that a user can observe in a field of view when the user uses the virtual reality device, it is usually necessary to render all objects within the field of view of the user. At the same time, it is required to present different images to the left eye and the right eye of the user (that is, to form parallax), and then the brain of the user synthesizes the different images of the left and right eyes to present the user with a visually stereoscopic image. As a result, parameters for a same object may be different in the first screen scene data and the second screen scene data. For example, for the same object, positions of the object observed by the left eye and the right eye may be different, and situations where light rays are refracted to the left and right eyes through the object are different. Therefore, in the present disclosure, the MRT thread renders both the first screen scene data and the second screen scene data. In this way, compared with rendering the object as a whole first and then outputting the rendered output results to the first screen and the second screen respectively through affine transformation, a more accurate and stereoscopic image can be obtained.

Optionally, the rendering of the first screen scene data and the second screen scene data is a multi-target rendering.

The multi-target rendering technique may store data of multiple pixels into different buffer regions (e.g., a buffer region for a color map, a buffer region for a normal map, and a buffer region for a depth map), so that these data become parameters of subsequent lighting effect shaders, thereby improving the fineness of the output image. With multi-target rendering technology, the rendering of illumination information can be delayed and the processing speed of rendering can be improved. Meanwhile, since the MRT thread renders the first screen scene data and the second screen scene data respectively, it is required to store pixel data of each object in the first screen scene data and the second screen scene data to the above buffer regions respectively, and then during the lighting effect shading, the above data is parsed to enhance the lighting effects of the images displayed on the first screen and the second screen. Compared with respectively performing an illumination shading calculation for each pixel in the entire scene by the common illumination shader, in the embodiment of the present disclosure, the multi-target rendering of the first screen scene data and the second screen scene data by the MRT thread can reduce the number of operations of the processor when the processor performs the illumination shading calculation, and can obtain images with enhanced illumination effect.

After completing the rendering of the first screen scene data and the second screen scene data, the rendering thread triggers the asynchronous time warp thread (ATW thread), and transmits the rendered first screen scene data and the second screen scene data to the asynchronous time warp thread through thread communication with the asynchronous time warp thread. The rendering thread then waits for a next vertical synchronization signal (second vertical synchronization signal) for a next cycle of rendering scene data.

It may be understood that when a VR image is rendered, it is required to render the VR image according to rendering parameters of the VR image. The VR image rendering parameters include a rendering resolution, a field of view angle, and user pose information. The field of view angle and user pose information may achieve texture rendering of the VR image, especially for a VR image with a complex scene, and scene complexity and rendering resolution play a decisive role on VR image rendering time. When TW processing is performed, it is required to process the image information according to the user pose information to achieve time warp processing of the image information.

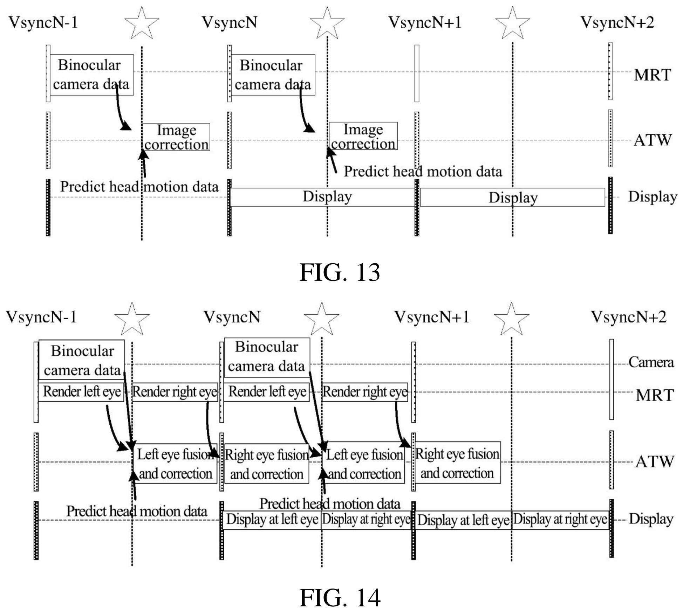

FIG. 13 is a schematic diagram of an image processing process when only an environment image is displayed in a see-through mode. As shown in FIG. 13, at a starting time point of the (N-1)-th frame (or a starting time point of the N-th frame), a rendering thread acquires image data acquired by an image acquisition apparatus and sends the image data to an asynchronous time warp thread.

As shown in FIG. 13, the asynchronous time warp thread corrects the received camera image data based on user pose data at a display time point (that is, one frame later) at an intermediate time point of the (N-1)-th frame (or an intermediate time point of the N-th frame) to obtain a corrected camera image data. At the starting time point of the N-th frame (or a starting time point of the (N+1)-th frame), after receiving a vertical synchronization signal of the Nth frame (or (N+1)-th frame), the asynchronous time warp thread outputs the corrected camera image data to the display screen for display.

FIG. 14 is a schematic diagram of an image processing process when both an environment image and a virtual view are displayed in a see-through mode. As shown in FIG. 14, at a starting time point of an (N-1)-th frame (or a starting time point of an N-th frame), a camera thread acquires image data acquired by an image acquisition apparatus and sends the image data to an asynchronous time warp thread. A rendering thread renders first screen scene data based on user pose data at a display time point (that is, 1.5 frames later), at an intermediate time point of the (N-1)-th frame (or an intermediate time point of the N-th frame), sends the rendered first screen scene data to an asynchronous time warp thread, and renders second screen scene data based on the user pose data at the display time point (that is, 1.5 frames later), and transmits the rendered second screen scene data to the asynchronous time warp thread, and at the starting time point of the N-th frame (or a starting time point of the (N+1)-th frame), sends the rendered second screen scene data to the asynchronous time warp thread.

The asynchronous time warp thread receives the rendered first screen scene data and the camera image data at an intermediate time point of the (N-1)-th frame (or the intermediate time point of the N-th frame), performs a dual-image overlay and fusion operation on the first screen scene data and the camera image data to obtain the fused first screen scene data, corrects the fused first screen scene data based on the user pose data at the display time point (that is, one frame later) to obtain the first screen scene output data, and outputs the first screen scene output data to the display screen for display at an end time point of the (N-1)-th frame (or an end time point of the N-th frame) after completion of the correction. After receiving the rendered second screen scene data at the end time point of the (N-1)-th frame (or the end time point of the (N+1)-th frame), the asynchronous time warp thread performs a dual-image overlay and fusion operation on the second screen scene data and the camera image data to obtain the fused second screen scene data, corrects the fused second screen scene data based on the user pose data at the display time point (that is, one frame later) to obtain the second screen scene output data, and outputs the second screen scene output data to the display screen for display at the intermediate time point of the (N-1)-th frame (or the intermediate time point of the (N+1)-th frame) after completion of the correction.

An embodiment of the present disclosure also provides a computer-readable storage medium storing executable instructions, and when the executable instructions are executed by a processor, the display method provided in any one of the above embodiments of the present disclosure may be achieved. The display method may be used for controlling the electronic device provided in the above embodiments of the present disclosure to perform display, thereby solving the problem of flicker caused by interference between a light emitting frequency of ambient light and an acquisition frame rate of a camera, and improving the use experience of a user. The method of driving the electronic device to display by executing executable instructions is basically the same as the display method provided in the above embodiments of the present disclosure, and will not be described in detail here.

In the description of the embodiments of the present disclosure, it should be understood that an orientation or position relation indicated by the terms "middle", "upper", "lower", "front", "rear", "vertical", "horizontal", "top", "bottom", "inner", "outer" and the like is based on the orientation or position relation shown in the accompanying drawings, which is only for the convenience of describing the present disclosure and simplifying the description, rather than indicating or implying that the device or the element referred to must have the specific orientation, or be constructed and operated in the specific orientation, and thus cannot be interpreted as a limitation on the present disclosure.

In the description of the embodiments of the present disclosure, unless otherwise explicitly specified and defined, the terms "mount", "connect", "couple" should be understood in a broad sense, for example, a connection may be a fixed connection or a detachable connection, or an integrated connection; it may be a mechanical connection or an electrical connection; it may be a direct connection, or may be an indirect connection through an intermediary, or may be an internal connection between two elements. Those of ordinary skills in the art can understand the specific meanings of the above mentioned terms in the present disclosure.

Those of ordinary skills in the art may understand that all or some of acts in the methods disclosed above, systems, functional modules or units in apparatuses may be implemented as software, firmware, hardware, and an appropriate combination thereof. In a hardware implementation mode, division of the function modules/units mentioned in the above description does not always correspond to division of physical components. For example, a physical component may have multiple functions, or a function or an act may be executed by several physical components in cooperation. Some components or all components may be implemented as software executed by a processor such as a digital signal processor or a microprocessor, or implemented as hardware, or implemented as an integrated circuit such as an application specific integrated circuit. Such software may be distributed on a computer readable medium, and the computer readable medium may include a computer storage medium (or a non-transitory medium) and a communication medium (or a transitory medium). As known to those of ordinary skills in the art, a term, computer storage medium, includes volatile and nonvolatile, and removable and irremovable media implemented in any method or technology for storing information (for example, a computer readable instruction, a data structure, a program module, or other data). The computer storage medium includes, but is not limited to, a RAM, a ROM, an Electrically Erasable Programmable Read Only Memory (EEPROM), a flash memory or another memory technology, a Compact Disc Read Only Memory (CD-ROM), a Digital Versatile Disk (DVD) or another optical disk storage, a magnetic cartridge, a magnetic tape, magnetic disk storage or another magnetic storage apparatus, or any other medium that may be configured to store desired information and may be accessed by a computer. In addition, it is known to those of ordinary skills in the art that the communication medium usually includes a computer readable instruction, a data structure, a program module, or other data in a modulated data signal of, such as, a carrier wave or another transmission mechanism, and may include any information delivery medium.

Although implementation modes of the present disclosure are disclosed above, contents described are only implementation modes used for ease of understanding of the present disclosure, but not intended to limit the present disclosure. Any person skilled in the art to which the present disclosure pertains may make any modifications and variations in a form and details of implementation without departing from the spirit and the scope of the present disclosure, but the protection scope of the present disclosure shall still be subject to the scope defined in the appended claims.

## Claims

1. A display method of an electronic device, wherein the electronic device comprises an image acquisition apparatus, and the method comprises:
detecting whether the electronic device enables a see-through function; and
controlling an acquisition frame rate of the image acquisition apparatus to be a second frequency when the electronic device enables the see-through function, wherein the second frequency is an integer multiple of a first frequency, and the first frequency is a light emitting frequency of ambient light.

2. The display method according to claim 1, wherein before the controlling the acquisition frame rate of the image acquisition apparatus to be the second frequency, the method further comprises:
detecting a light emitting frequency of ambient light; and
triggering the act of controlling the acquisition frame rate of the image acquisition apparatus to be the second frequency when the light emitting frequency of the ambient light is the first frequency.

3. The display method according to claim 1 or 2, wherein the detecting whether the electronic device enables the see-through function comprises any one or more of the following:
detecting whether an instruction for enabling the see-through function is received,
detecting whether a user reaches a safety boundary, and
detecting whether a distance between an external object and the user is less than or equal to a preset distance threshold.

4. The display method according to claim 1 or 2, further comprising:
acquiring a screen display frame rate of the electronic device;
detecting whether a ratio of the screen display frame rate to the acquisition frame rate of the image acquisition apparatus is within a preset ratio range; and
when the ratio of the screen display frame rate to the acquisition frame rate of the image acquisition apparatus is not within the preset ratio range, adjusting the screen display frame rate, so that the ratio of the screen display frame rate to the acquisition frame rate of the image acquisition apparatus is within the preset ratio range.

5. The display method according to claim 1 or 2, further comprising:
detecting whether the electronic device disables the see-through function;
detecting whether an instruction for enabling a gesture recognition function is received when the electronic device disables the see-through function; and
controlling the acquisition frame rate of the image acquisition apparatus to be a third frequency when the instruction for enabling the gesture recognition function is received, wherein the third frequency is greater than the second frequency.

6. The display method according to claim 1 or 2, further comprising:
detecting whether the light emitting frequency of the ambient light changes;
when the light emitting frequency of the ambient light changes, controlling the acquisition frame rate of the image acquisition apparatus to be a fourth frequency, wherein the fourth frequency is greater than the second frequency, and detecting whether a ratio of a screen display frame rate of the electronic device to the acquisition frame rate of the image acquisition apparatus is within a preset ratio range; and
when the ratio of the screen display frame rate to the acquisition frame rate of the image acquisition apparatus is not within the preset ratio range, adjusting the screen display frame rate, so that the ratio of the screen display frame rate to the acquisition frame rate of the image acquisition apparatus is within the preset ratio range.

7. The display method according to claim 1 or 2, further comprising:
when the electronic device enables the see-through function and the light emitting frequency of the ambient light is not the first frequency, controlling the acquisition frame rate of the image acquisition apparatus to be a fourth frequency, wherein the fourth frequency is greater than the second frequency.

8. The display method according to claim 1 or 2, further comprising:
when the electronic device has enabled the see-through function, detecting whether a head movement speed is greater than or equal to a preset movement threshold;
when the head movement speed is greater than or equal to the preset movement threshold, controlling the acquisition frame rate of the image acquisition apparatus to be a fifth frequency, wherein the fifth frequency is greater than the second frequency; and
when the head movement speed is less than the preset movement threshold, triggering the act of detecting the light emitting frequency of the ambient light.

9. The display method according to claim 1 or 2, further comprising:
when the electronic device does not enable the see-through function, controlling the acquisition frame rate of the image acquisition apparatus to be a third frequency, wherein the third frequency is greater than the second frequency.

10. The display method according to claim 9, further comprising:
when the electronic device does not enable the see-through function, acquiring a frame rate recommended by an application;
when the frame rate recommended by the application is less than or equal to the third frequency, controlling the acquisition frame rate of the image acquisition apparatus to be the frame rate recommended by the application; and
when the frame rate recommended by the application is greater than the third frequency, controlling the acquisition frame rate of the image acquisition apparatus to be a sixth frequency, wherein the sixth frequency is less than the frame rate recommended by the application.

11. The display method according to claim 10, further comprising:
acquiring a maximum screen display frame rate of the electronic device, and detecting a magnitude of the maximum screen display frame rate and a magnitude of the frame rate recommended by the application;
when the maximum screen display frame rate is greater than the frame rate recommended by the application, adjusting the acquisition frame rate of the image acquisition apparatus to be consistent with the frame rate recommended by the application; and
when the maximum screen display frame rate is less than the frame rate recommended by the application, performing data statistics according to data amount acquired by the image acquisition apparatus and data amount to be displayed on a display screen of the electronic device, and determining the acquisition frame rate of the image acquisition apparatus and the screen display frame rate according to a statistical result.

12. The display method according to claim 9, wherein the second frequency is selected and generated by a user according to a first selectable frame rate of the electronic device, or the second frequency is generated by the electronic device based on a power supply power frequency in a region where the electronic device is located, wherein the first selectable frame rate comprises at least one second frequency recommended frame rate, and the second frequency recommended frame rate is consistent with the power supply power frequency in the region where the electronic device is located; and
the third frequency is selected and generated by the user according to a second selectable frame rate of the electronic device, or the third frequency is generated by the electronic device based on a load condition of the electronic device.

13. The display method according to claim 1 or 2, wherein when the electronic device enables the see-through function and simultaneously displays an environment image and a virtual view, the electronic device starts a camera thread, a rendering thread, and an asynchronous time warp thread, and the method further comprises:
at a first starting time point, acquiring, by the camera thread, image data acquired by the image acquisition apparatus, and sending the image data to the asynchronous time warp thread;
at the first starting time point, rendering, by the rendering thread, first screen scene data based on first predicted user pose data; at a first intermediate time point, sending the rendered first screen scene data to the asynchronous time warp thread, and rendering second screen scene data based on second predicted user pose data; and at a first display time point, sending the rendered second screen scene data to the asynchronous time warp thread; and
at the first intermediate time point, performing, by the asynchronous time warp thread, a fusion operation on the first screen scene data and the image data and performing correction based on third predicted user pose data to obtain first screen output data; at the first display time point, outputting the first screen output data to a display screen for display, performing a fusion operation on the second screen scene data and the image data and performing correction based on the third predicted user pose data to obtain second screen output data; and at a second display time point, outputting the second screen output data to the display screen for display, wherein the first intermediate time point is located between the first starting time point and the first display time point, and the first display time point is located between the first intermediate time point and the second display time point.

14. The display method according to claim 1 or 2, wherein when the electronic device enables the see-through function and only displays an environment image, the electronic device starts a rendering thread and an asynchronous time warp thread, and the method further comprises:
at a second starting time point, acquiring, by the rendering thread, image data acquired by the image acquisition apparatus and sending the image data to the asynchronous time warp thread; and
at a second intermediate time point, correcting, by the asynchronous time warp thread, the image data based on fourth predicted user pose data; at a third display time point, outputting the corrected data to a display screen for display, wherein the second intermediate time point is located between the second starting time point and the third display time point.

15. The display method according to claim 1 or 2, wherein when the electronic device disables the see-through function and only displays a virtual view, the electronic device starts a rendering thread and an asynchronous time warp thread, and the method further comprises:
at a third starting time point, rendering, by the rendering thread, first screen scene data based on fifth predicted user pose data; at a third intermediate time point, sending the rendered first screen scene data to the asynchronous time warp thread, and rendering second screen scene data based on sixth predicted user pose data; and at a fourth display time point, sending the rendered second screen scene data to the asynchronous time warp thread; and
at the third intermediate time point, correcting, by the asynchronous time warp thread, the rendered first screen scene data based on seventh predicted user pose data to obtain first screen output data; at the fourth display time point, outputting the first screen output data to a display screen for display, and correcting the rendered second screen scene data based on the seventh predicted user pose data to obtain second screen output data; at a fifth display time point, outputting the second screen output data to the display screen for display, wherein the third intermediate time point is located between the third starting time point and the fourth display time point, and the fourth display time is located between the third intermediate time point and the fifth display time point.

16. A processing device, comprising: a processor and a memory storing a computer program that is runnable on the processor, wherein when executing the computer program, the processor performs the acts of the display method according to any one of claims 1 to 15.

17. An electronic device, comprising: an image acquisition apparatus and the processing device according to claim 16.

18. A computer readable storage medium storing computer executable instructions, wherein the computer executable instructions are used for performing the display method according to any one of claims 1 to 15.
